# EUROPEAN PATENT APPLICATION

(11) **EP 3 955 087 A1**
(43) Date of publication of application: **16.02.2022**
(21) Application number: 20190233.5
(22) Date of filing: 10.08.2020
(51) Int. Cl.: G06F 1/16, H04M 1/04, F16M 13/00, A47B 23/04

(54) **DOCKING STATION WITH AUTO-DETECTION**

(71) Applicant: BSH Hausgeräte GmbH, 81739 München (DE)
(72) Inventor: Sagoo, Kiran Pal, 82256 Fürstenfeldbruck (DE)

(57) **Abstract**

A docking station (100) for a flat object (200, 430) is described. The docking station (100) comprises a main body (106); one or more feet (105, 111) extending downwards from the main body (106) and enabling the main body (106) to be placed on a ground; and a back support (102) extending upwards from the main body (106) and enabling a flat object (200, 430) to be placed into the docking station (100). Furthermore, the docking station (100) comprises a control unit (120) configured to determine whether or not a flat object (200, 430) has been placed into the docking station (100); and to operate the docking station (100) in dependence on whether it is determined that a flat object (200, 430) has been placed into the docking station (100) or not.

## Description

The present document relates to a docking station which may be used within a household, notably within a kitchen, e.g. to provide support for cooking.

A docking station may be used within a household, notably within a kitchen, to provide support for a household task, such as cooking, to a user of the docking station. The user may place an electronic device such as a tablet PC onto a support of the docking station, and the docking station may be used for rending music which is provided by the tablet PC.

The present document addresses the technical problem of increasing the comfort of use of a docking station. The technical problem is solved by the independent claim. Preferred examples are described in the dependent claims.

According to an aspect, a docking station for a flat object is described. The flat object may be a handheld electronic device such as a tablet PC or a smartphone. Alternatively, or in addition, the flat object may be a sheet-formed object comprising a machine-readable entity (notably for providing a recipe). The sheet-formed object may be made from and/or may comprise paper, cardboard, plastic and/or metal. By way of example the sheet-formed object may be a sheet of paper or of cardboard.

The docking station may be configured to be placed on a table or a worktop within a kitchen. Furthermore, the docking station may be configured to hold a DIN A4 or DIN A5 sized sheet or a typical tablet PC (e.g. with a display size of 12 inches or less).

The docking station comprises a main body, wherein the main body may exhibit a (circular) cylindrical form. The main body may exhibit a longitudinal axis which may be oriented in parallel to the ground (e.g. the worktop) onto which the docking station is placed. The main body may e.g. have a diameter between 4cm and 15cm. Furthermore, the main body may e.g. have a length along the longitudinal axis between 10cm and 25cm.

In addition, the docking station comprises one or more feet extending downwards from the main body and enabling the main body to be placed on a ground (e.g. a worktop). The one or more feet may extend along the longitudinal axis of the main body (e.g. from one end to the other end of the main body). The docking station may exhibit a front foot (facing the user of the docking station, when the user is using the docking station). Alternatively, or in addition, the docking station may exhibit a rear foot (at the rear side of the docking station). By providing one or more feet, the docking station may be placed on a ground in a stable manner.

In addition, the docking station comprises a back support extending upwards from the main body and enabling a flat object (notably an electronic device and/or a sheet-formed object) to be placed into the docking station. The back support may exhibit an angle between 45° and 75° relative to the ground that the docking station is standing on. The back support may form a flat backplane which is at least partially in contact with the backside of a flat object that is placed into the docking station. In other words, the back support may hold a flat object from the back.

Furthermore, the docking station comprises a control unit which is configured to (automatically) determine whether or not a flat object has been placed into the docking station. For this purpose, the docking station may comprise one or more sensors (notably a load sensor and/or a presence sensor) which are configured to capture sensor data regarding the presence of a flat object.

The control unit is further configured to operate the docking station in dependence on whether it is determined that a flat object has been placed into the docking station or not. In particular, the control unit may operate the docking station to control an electronic device placed within the docking station. Alternatively, or in addition, the control unit may control rendering of an audio signal in dependence on the presence of a sheet-formed object.

Hence, a docking station is described which is configured to automatically detect the presence of a flat object, which is configured to interact with the docking station (such as an electronic device and/or a sheet-formed object with a machine-readable entity). By doing this, the comfort of use of a user of the docking station may be increased.

A indicated above, the flat object may be a sheet-formed object comprising a machine-readable entity. The machine-readable entity may comprise or may be a machine-readable code, an RFID chip and/or an NFC chip. The sheet-formed object may e.g. be a card with an integrated machine-readable entity. The card may be indicative of a recipe. The sheet-formed object may comprise a text section which indicates text that can be read by a user of the docking station. The text may indicate a recipe.

The docking station may comprise an entity sensor configured to capture entity data regarding the machine-readable entity. Furthermore, the control unit may be configured to operate the docking station in dependence on the entity data. The entity data may be indicative of an audio signal. In particular, the entity data may be indicative of a network location, from which data, notably an audio signal, which is to be rendered by the docking station is downloadable.

The docking station may comprise a loudspeaker, notably within the main body. The control unit may be configured to render the audio signal via the loudspeaker. The audio signal which is rendered may correspond to the text indicated within the text section of the sheet-formed object. In particular, the audio signal may correspond to the recipe which is indicated by the text of a recipe card.

Hence, the docking station may allow a user to place a sheet-formed object (e.g. a recipe card) into the docking station. Furthermore, the docking station may be configured to render an audio signal associated with the sheet-formed object, e.g. for providing audio instructions regarding a recipe. By doing this, the comfort of use of a user may be further increased.

The docking station may comprise at least one load sensor configured to capture load data regarding a physical load, notably a weight, impacting on the docking station. The load sensor may be configured to detect, whether the weight of the docking station has increased. The docking station may comprise at least one load sensor on at least one foot of the docking station.

Alternatively, or in addition, the docking station may comprise a base support within the contact area between the back support and the main body. The base support may be configured to receive a lower end of the flat object, when the flat object is placed into the docking station. The docking station may comprise at least one load sensor at the base support.

The control unit may be configured to determine whether or not a flat object has been placed into the docking station based on the load data. By making use of one or more load sensors, the auto-detection of a flat object may be implemented in a particularly reliable manner.

Alternatively, or in addition, the docking station may comprise at least one presence sensor at the base support. The presence sensor may be configured to capture presence data regarding the presence or the absence of a flat object. The presence sensor may comprise an infrared sensor and/or a capacitive sensor. The control unit may be configured to determine whether or not a flat object has been placed into the docking station based on the presence data. By making use of one or more presence sensors, the auto-detection of a flat object may be implemented in a particularly reliable manner.

The docking station may comprise at least two load sensors and/or presence sensors at different locations within the docking station. As a result of this, the reliability of auto-detection may be increased further.

As indicated above, the docking station may be configured to receive a handheld electronic device as a flat object. The control unit may be configured to send a control signal to the electronic device, if it is determined that the electronic device has been placed into the docking station. The control signal may be directed at the execution of a pre-determined software application on the electronic device. Alternatively, or in addition, the control signal may be directed at the connection of the electronic device to a pre-determined internet site. By enabling the control of the electronic device in reaction to the auto-detection of the electronic device, the comfort of use for a user may be increased further.

The docking station may comprise one or more isolating elements configured to isolate vibrations caused by the loudspeaker from a flat object held by the back support of the docking station. The one or more isolating elements may comprise one or more isolating elements within an inner area (notably on the plate) of the back support; and/or an isolating element at a top edge of the back support; and/or the base support within the contact area between the back support and the main body, which is configured to receive the lower end of the flat object, when the flat object is placed into the docking station; and/or one or more isolating elements at a foot of the docking station. The one or more isolating elements may comprise an elastomer, silicone and/or rubber. By providing one or more isolating elements, the comfort of use of the docking station may be increased further.

The docking station may comprise a gesture sensor configured to capture gesture data regarding a gesture, notably a hand gesture, performed by a user of the docking station. The control unit may be configured to control the docking station, notably to control rendering of an audio signal, in dependence on the gesture data. By way of example, rendering of a subsequent instruction for a recipe may be controlled using a gesture. The use of gesture control provides a further increase of the comfort of use of the docking station. Furthermore, also the displaying behavior of the handheld electronic device may be controlled by gestures. Thus, the control unit may be configured to control the docking station and/or the handheld electronic device (e.g. via Bluetooth), notably to control rendering of a visual signal, in dependence on the gesture data. This may allow the user to jump from one cooking step to the next cooking step in the recipe with dirty fingers without soiling the display of the handheld electronic device.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
Figure 1 shows an example docking station;
Figure 2 shows an example recipe card;
Figure 3 illustrates a user interaction with the docking station;
Figure 4a shows an example docking station in a side view;
Figure 4b shows a docking station comprising a load sensor;
Figure 4c shows another docking station comprising a load sensor;
Figure 4d shows a docking station comprising a presence sensor;
Figure 5a shows a docking station comprising example isolator elements;
Figure 5b shows a docking station holding a tablet PC;
Figure 5c shows example layers of the back support of a docking station;
Figures 5d and 5e show example dimensions of an isolating base support of a docking station.

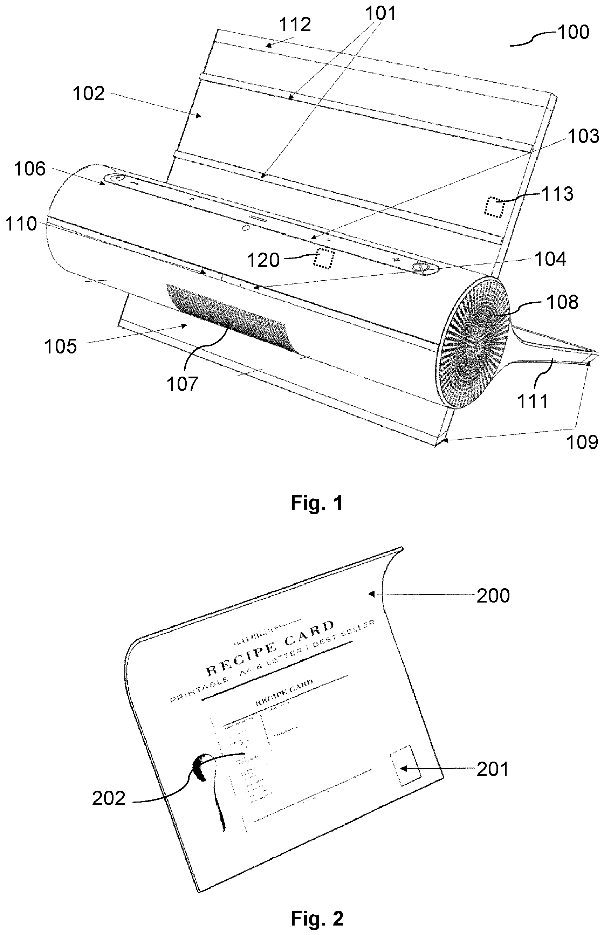

As outlined above, the present document is directed at increasing the comfort of use of a docking station. In this context, Fig. 1 shows an example docking station 100. The docking station 100 comprises a main chamber or main body 106, which may have a cylindrical form as illustrated in Fig. 1. The main chamber 106 may comprise one or more electronic components such as a control unit 120, e.g. a microcontroller, of the docking station 100. Furthermore, the main chamber 106 may comprise a control panel 103 with one or more control elements, notably control buttons. The control panel 103 may enable a user to interact with the docking station 100.

Alternatively, or in addition to a control panel 103, the docking station 100 may comprise a gesture sensor 104 (located e.g. on the main chamber 106), which is configured to sense gesture data regarding a (hand) gesture performed by a user of the docking station 100. The docking station 100 may then be controlled in dependence of the gesture data. In addition, the docking station 100 may comprise one or more light elements 110, notably light emitting diodes (LED), e.g. for providing status information regarding the status of the docking station 100 to a user of the docking station 100.

The main chamber 106 may further comprise one or more loudspeakers 108 which are configured to emit an audio signal. The one or more loudspeakers 108 may be located at a face side of the (cylindrical) main chamber 106. The main chamber 106 may act as an acoustic chamber for improving the sound quality of the one or more loudspeakers 108. In addition, the docking station 100 may comprise a (passive) acoustic radiator 107 on the (cylindrical) surface of the main chamber 106, preferably facing the user of the docking station 100.

The docking station 100 may comprise one or more base feet 105, 111, notably a base foot 105 at a front side facing the user and/or a rear foot 111 at a rear side of the docking station 100. The one ore more base feet 105, 111 may be attached to the main chamber 106, and may extend from the main chamber 106 towards the ground, on which the docking station 100 is placed. The one or more base feet 105, 111 may extend along the longitudinal axis of the (cylindrical) main chamber 106.

The one or more base feet 105, 111 may each comprise an isolator element 109, e.g. comprising silicone, at the end which is in contact with the ground that the docking station 100 is placed on. The use of an isolator element 109 allows the docking station 100 to be placed in a stable manner. Furthermore, the docking station 100 may be isolated against vibrations.

In addition, the docking station 100 comprises a back support 102 which extends from the main chamber 106 upwards (i.e. away from the ground that the docking station 100 is placed on). The back support 102 may exhibit an angle with regards to the ground between 45° and 75°, when the docking station 100 is placed on the ground. The back support 102 may be designed as a support for a typical tablet PC (e.g. with a screen size between 8 inch and 13 inch). The back support 102 may extend along the longitudinal axis of the main chamber 106 (from one end to the other end of the main chamber 106).

The back support 102 may exhibit one or more isolator stripes 101 which may extend horizontally across the back support 102. Furthermore, the back support 102 may comprise an isolator section 112 at the top end of the back support 102. The use of isolator stripes 101 and/or of an isolator section 112 allows an object, such as a tablet PC, to be placed onto the back support 102 in a stable manner. Furthermore, isolation of vibrations may be provided.

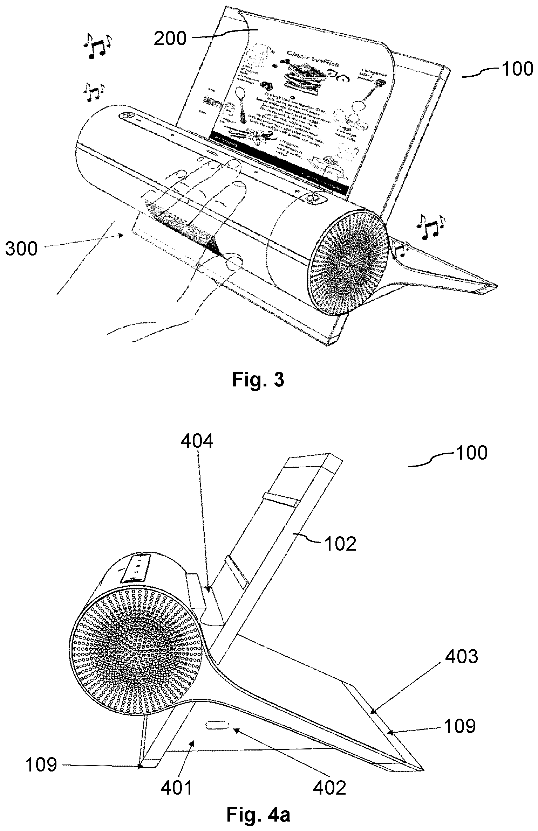

In addition, the docking station 100 may comprise a base support 404, as shown in Fig. 4a, which is located at the contact point between the main chamber 106 and the back support 102. The base support 404 may form a gap within which the lower edge of an object, notably of a tablet PC, may be placed, in order to hold the object in a stable manner on the back support 102. The base support 404 may comprise an isolating material, in order to allow vibrations of the docking station 100 (e.g. due to rending of an audio signal via a loudspeaker 108 of the docking station 100) to be isolated.

The docking station 100 may be configured to allow a sheet-formed object to be placed onto the back support 102. Fig. 2 shows as an example of a sheet-formed object 200 a recipe card which comprises a text section 202 indicating a recipe for a food item. A user may place a sheet-formed object 200, notably a recipe card, onto the back support 102 of the docking station 100. Furthermore, the user may read the text section 202 on the sheet-formed object 200, e.g. to be guided through a cooking process for preparing the food item.

Reading the text section 202 of the sheet-formed object 200 may be uncomfortable for the user. The sheet-formed object 200 may comprise a machine-readable entity 201, such as a machine-readable code (e.g. a bar code or a QR code), an RFID (radio-frequency ID) chip, or an NFC (near field communication) chip. The docking station 100 may comprise an entity sensor 113 which is configured to capture entity sensor data (in short entity data) regarding the machine-readable entity 201 of the sheet-formed object 200 which is placed on the back support 102. The entity sensor 113 may be configured to read a machine-readable code, an RFID chip and/or an NFC chip.

The control unit 120 of the docking station 100 may be configured to determine an audio signal based on the entity data. The audio signal may e.g. correspond to the text comprised within the text section 202 of the sheet-formed object 200 that is placed on the back support 102. The audio signal may e.g. be read directly from the machine-readable entity 201. Alternatively, or in addition, the audio signal may be derived from an internet server using e.g. an internet address indicated within the entity data. For this purpose, the docking unit 100 may be configured to connect to the internet, e.g. via wireless communication, such as WLAN.

The audio signal may be rendered by the docking station 100 in order to provide the text in an audible manner. By doing this, the comfort for the user may be increased. In particular, the user may be guided through a recipe using audio instructions.

Fig. 3 shows an example sheet-formed object 200 placed on the back support 102 of the docking station 200. Furthermore, Fig. 3 illustrates the hand 300 of a user of the docking station 200. The gesture sensor 104 of the docking station 100 may be configured to detect a hand gesture performed by the user. The hand gesture may e.g. be used to start rendering of a subsequent audio section of the audio signal (e.g. for rendering the subsequent instruction for a recipe). Hence, the user may be enabled to control rendering of the audio signal derived from the sheet-formed object 200 in a particularly comfortable manner.

Hence, a docking station 100 is described, which allows an improved interaction with a user. In particular, the docking station 100 allows a recipe card 200 to be placed onto the docking station 100. The recipe card 200 may be a card or paper with an integrated (passive) NFC chip 201, which allows the docking station 100 to identify the recipe that the recipe card 200 is associated with.

As soon as the user places the recipe card 200 on the docking station 100, the NFC reader 113 inside the docking station 100 identifies the recipe card and links the docking station 100 to the internet or to a data cloud. The voice instruction for that specific card 200 may be downloaded onto the docking station 100 for easy access. The user may be enabled to swipe left/right with his/her hand 300 to go through the recipe without reading the text section 202 of the card 200 and without touching the card 200. In this way, the user may comfortably jump from one cooking step to the next cooking step in the recipe with dirty fingers without soiling the card 200 (or the tablet PC in one of the other embodiments).

Hence, a docking station 100 is described which may be used with other objects than tablet PCs for enabling a household, notably a cooking, support to a user. In particular, the docking station 100 may be enabled to provide a guided cooking service over voice. The recipe cards 200 may e.g. be provided in commerce. They are typically easy to use and may be stored in an efficient manner.

Figure 4a shows a side view of the docking station 100. The docking station 100 may comprise a housing 401 for one or more electronic components (e.g. for the control unit 120). The housing 401 may be located between the front foot 105 and the rear foot 111 of the docking station 100. Furthermore, the docking station 100 may comprise a data and/or power interface 402 (e.g. a USB-C interface) for data communication and/or for power supply. In addition, the docking station 100 may comprise a section 403 for placing a power cord for a power supply.

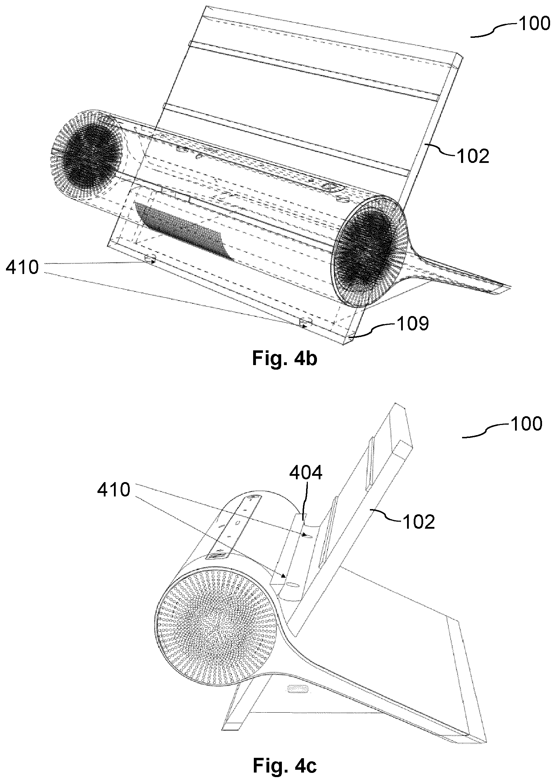

As indicated above, the docking station 100 may comprise a back support 102 for placing an object, such as a tablet PC or a sheet-formed object 200 (referred to in general as flat objects). As shown in Fig. 4b, the docking station 100 may comprise one or more load sensors 410 which are configured to capture sensor data (referred to herein as load data) regarding the load which is carried by the docking station 100. In particular, the load data may indicate the weight of an object that is placed on the back support 102 of the docking station 100.

Fig. 4c shows an example, where one or more load sensors 410 as located within the base support 404 of the docking station 100, onto which an object, notably a tablet PC, may be placed.

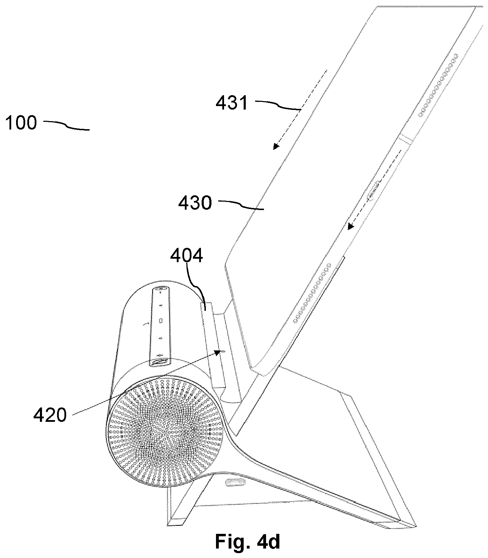

Fig. 4d shows an example of a docking station 100 comprising a presence sensor 420, such as an Infrared (IR) sensor and/or a capacitive sensor, which is located at the base support 404 of the docking station 100. Furthermore, Fig. 4d illustrates how an electronic device 430, notably a tablet PC, may be placed along the direction 431 onto the base support 404. The presence sensor 420 may be configured to capture sensor data (referred to herein as presence data) regarding the presence of an object within the base support 404. In particular, the presence sensor 420 may be configured to determine whether an object is present or whether no object is present.

The control unit 120 of the docking station 100 may be configured to operate the docking station 100 in dependence of the load data and/or of the presence data. By way of example, the docking station 100 may send a control signal to the electronic device 430, as soon as it has been detected that the electronic device 430 has been placed onto the base support 404. The control signal may be sent e.g. via a wireless or wireline communication interface between the docking station 100 and the electronic device 430 (e.g. via Bluetooth). The control signal may e.g. cause the electronic device 430 to connect to and/or to show a particular internet page on the display of the electronic device 430.

Hence, the docking station 100 may be configured to detect that a user places an electronic device 430 such as a tablet PC or a smartphone onto the docking station 100. In reaction to this, a particular SW application may be launched automatically on the electronic device 430 (e.g. caused by the control signal sent from the docking station 100 to the electronic device 430). This auto-docking and/o auto-detection may be enabled by the use of one or more load or weight sensors 410 which may be placed at the base support 404 and/or at the feet 105, 111 of the docking station 100. Alternatively, or in addition, a presence sensor 430 at the base support 404 may be used to enable audio-docking. Once docking has been detected, a software trigger may cause the docking station 100 and the device 430 to be connected via a communication interface, such as Bluetooth. Hence, the control unit 120 may be configured to automatically establish a (wireless) data communication interface between the docking station 100 and the device 430, as soon as the presence of the device 430 has been detected.

Preferably, at least two load sensors 410 and/or presence sensors 420 may be used, in order to increase the precision and the reliability for detecting the presence of an electronic device 430. Furthermore, an erroneous placement of an electronic device 430 onto the docking station 100 may be detected.

Hence, the docking station 100 may be configured to enable auto-docking of an electronic device 430 without the need of any user input.

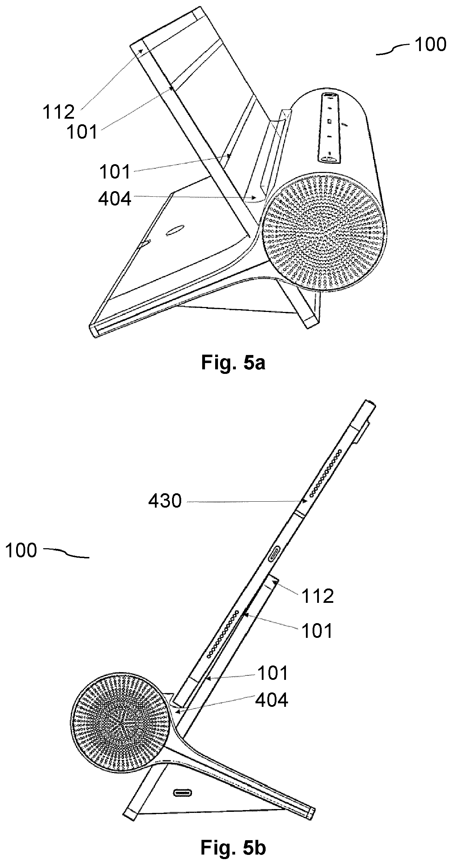

As already outlined above, the docking station 100 may comprise various different isolator elements 101, 112, 404, which are configured to provide an isolation of vibrations between the docking station 100 and an electronic device 430 which is placed onto the back support 102 and/or the base support 404 of the docking station 100, as illustrated in Figures 5a to 5e. In particular, the isolator elements 101, 112, 404 may be configured to damp or to isolate vibrations which are caused by the one or more loudspeakers 108 of the docking station 100. As a result of this, the electronic device 403, which is positioned on the docking station 100, exhibits a reduced amount or extent of vibrations (compared to the amount or extent of vibrations of the docking station 100), thereby enabling a user to view the display of the electronic device 430 in a comfortable manner.

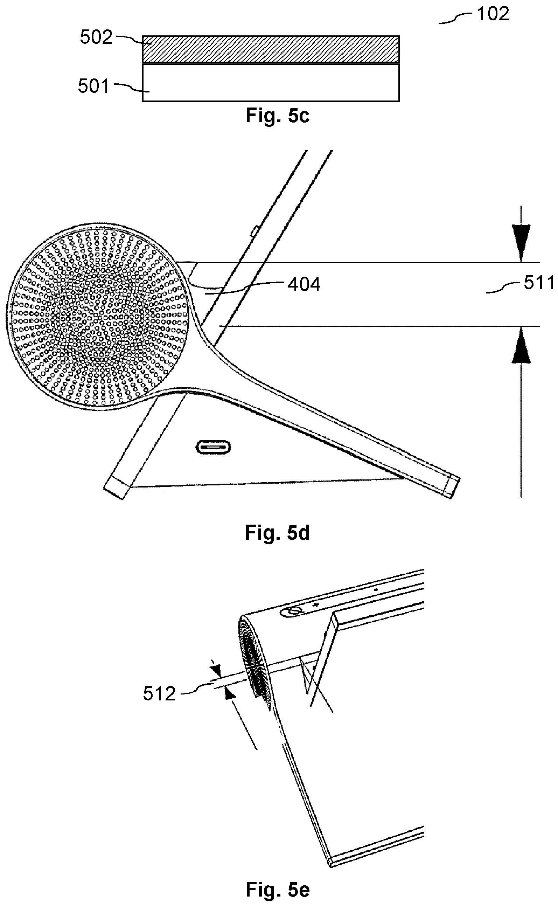

Fig. 5c shows an example back support 102 comprising an isolator layer 502 which is facing the electronic device 430 and which exhibits an isolating property with regards to vibrations. The isolator layer 503 may have a width of 3mm or more. Furthermore, the back support 102 may comprise a structural layer 501 which provides structural support for the isolator layer 502. By providing a multi-layered back support 102 isolation of vibrations may be provided in a particular efficient and reliable manner.

As indicated above, the base support 404 of the docking station 100 may be configured to provide an isolation for vibrations. In particular, the docking station 100 may be designed such that the electronic device 430 is clamped at one edge by the (elastic and/or isolating) base support 404 and such that the back of the electronic device 430 touches one or more isolating elements 101, 112, notably an isolating element 112 at the upper end of the back support 102. The base support 404 may exhibit an overall size or height 511 and/or width 512, which are sufficient for providing a pre-determined degree of isolation, as indicated in the Figs. 5d and 5e.

Hence, the docking station 100 may be designed such that a handheld electronic device 430 does not directly touch the back support 102 and/or the top of the main chamber 206 comprising the loudspeaker 108. For this purpose, soft silicone strips 101 may be placed throughout the length of the docking station 100, which separate the placed device 430 from the parts of the docking station 100. There may be one or two silicone and/or rubber strips 101 placed at a defined distance from one another on the back support 102. Furthermore, there may be on the top of the back support 102 a section 112 made of silicone and/or rubber. The base support 404, on which the device 430 is placed may be made of silicone and/or rubber. Furthermore, the base support 404 may be constructed in a way to avoid the slippage of the device 430 and/or to provide isolation of the handheld device 430 from the speaker compartment 106

In other words, the docking station 100 may comprise one or more silicone supports 101, 112, 404 at various different locations to avoid slippage and to reduce the transmission of vibrations onto a device 430 which is placed within the docking station 100. A silicone support 404 at the base may be configured to hold various different types of tablet PCs and/or smartphones, and may be configured to isolate the device 430 from the acoustic chamber 106. The silicone support material may be designed to lift the handheld device 430 to a height which allows tablet PCs with a relatively thin bezel to be operated easily. Different isolation elements 101, 109, 112, 404 may be placed at the base support 404, the back support 102 and/or the feet 105, 111. The base support 404 may exhibit a certain minimum height 511 (e.g. 17mm) and/or a certain minimum width 512 to provide a stable support for the device 430 and to provide a reliable isolation of vibrations.

By providing isolation elements 101, 109, 112, 404 vibrations may be reduced and the quality of audio output may be improved. Furthermore, the stability of a device 430 placed on the docking station 100 may be increased. Furthermore, the placement of a variety of different types of devices 430 is enabled. In addition, it is enabled that devices 430 with a relatively thin bezel can be placed without compromising usability.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A docking station (100) for a flat object (200, 430); the docking station (100) comprising
- a main body (106);
- one or more feet (105, 111) extending downwards from the main body (106) and enabling the main body (106) to be placed on a ground;
- a back support (102) extending upwards from the main body (106) and enabling a flat object (200, 430) to be placed into the docking station (100); and
- a control unit (120) configured to
- determine whether or not a flat object (200, 430) has been placed into the docking station (100); and
- operate the docking station (100) in dependence on whether it is determined that a flat object (200, 430) has been placed into the docking station (100) or not.

2. The docking station (100) according to claim 1, wherein
- the flat object (200, 430) is a sheet-formed object (200) comprising a machine-readable entity (201);
- the docking station (100) comprises an entity sensor (113) configured to capture entity data regarding the machine-readable entity (201); and
- the control unit (120) is configured to operate the docking station (100) in dependence on the entity data.

3. The docking station (100) according to claim 2, wherein
- the entity data is indicative of an audio signal;
- the docking station (100) comprises a loudspeaker (108), notably within the main body (106);
- the control unit (120) is configured to render the audio signal via the loudspeaker (108); and
- the sheet-formed object (200) notably comprises a text section (202) indicating text which corresponds to the audio signal.

4. The docking station (100) according to any of claims 2 to 3, wherein
- the machine-readable entity (201) comprises a machine-readable code, an RFID chip and/or an NFC chip; and/or
- the entity data is indicative of a network location, from which data, notably an audio signal, which is to be rendered by the docking station (100) is downloadable.

5. The docking station (100) according to any previous claims, wherein
- the docking station (100) comprises at least one load sensor (410) configured to capture load data regarding a physical load, notably a weight, impacting on the docking station (100); and
- the control unit (120) is configured to determine whether or not a flat object (200, 430) has been placed into the docking station (100) based on the load data.

6. The docking station (100) according to claim 5, wherein
- the docking station (100) comprises at least one load sensor (410) on at least one foot (105, 111) of the docking station (100); and/or
- the docking station (100) comprises a base support (404) within a contact area between the back support (102) and the main body (106);
- the base support (404) is configured to receive a lower end of the flat object (200, 430), when the flat object (200, 430) is placed into the docking station (100); and
- the docking station (100) comprises at least one load sensor (410) at the base support (404).

7. The docking station (100) according to any previous claims, wherein
- the docking station (100) comprises a base support (404) within a contact area between the back support (102) and the main body (106);
- the base support (404) is configured to receive a lower end of the flat object (200, 430), when the flat object (200, 430) is placed into the docking station (100);
- the docking station (100) comprises at least one presence sensor (420) at the base support (404);
- the presence sensor (420) is configured to capture presence data regarding the presence or the absence of the flat object (200, 430); and
- the control unit (120) is configured to determine whether or not a flat object (200, 430) has been placed into the docking station (100) based on the presence data.

8. The docking station (100) according to claim 7, wherein the presence sensor (420) comprises an infrared sensor and/or a capacitive sensor.

9. The docking station (100) according to any of claims 5 to 8, wherein the docking station (100) comprises at least two load sensors (410) and/or presence sensors (420) at different locations within the docking station (100).

10. The docking station (100) according to any previous claims, wherein
- the docking station (100) is configured to receive a handheld electronic device (430) as a flat object (200, 430); and
- the control unit (120) is configured to send a control signal to the electronic device (430), if it is determined that the electronic device (430) has been placed into the docking station (100).

11. The docking station (100) according to claim 10, wherein
- the control signal is directed at an execution of a pre-determined software application on the electronic device (430); and/or
- the control signal is directed at a connection of the electronic device (430) to a pre-determined internet site.

12. The docking station (100) according to any previous claims, wherein
- the main body (106) comprises a loudspeaker (108) configured to render an audio signal; and
- the docking station (100) comprises one or more isolating elements (101, 109, 112, 404) configured to isolate vibrations caused by the loudspeaker (108) from a flat object (200, 430) held by the back support (102) of the docking station (100).

13. The docking station (100) according to claim 12, wherein the one or more isolating elements (101, 109, 112, 404) comprise
- one or more isolating elements (101) within an inner area of the back support (102); and/or
- an isolating element (112) at a top edge of the back support (102); and/or
- a base support (404) within a contact area between the back support (102) and the main body (106), which is configured to receive a lower end of the flat object (200, 430), when the flat object (200, 430) is placed into the docking station (100); and/or
- one or more isolating elements (109) at a foot (105, 111) of the docking station (100),

14. The docking station (100) according to any of claims 12 to 13, wherein the one or more isolating elements (101, 109, 112, 404) comprise an elastomer, silicone and/or rubber.

15. The docking station (100) according to any previous claims, wherein
- the docking station (100) comprises a gesture sensor (104) configured to capture gesture data regarding a gesture, notably a hand gesture, performed by a user of the docking station (100); and
- the control unit (120) is configured to control the docking station (100), notably to control rendering of an audio signal, in dependence on the gesture data.

## Amended claims

### Amended claims in accordance with Rule 137(2) EPC.

1. A docking station (100) for a flat object (200, 430); the docking station (100) comprising
- a main body (106);
- one or more feet (105, 111) extending downwards from the main body (106) and enabling the main body (106) to be placed on a ground;
- a back support (102) extending upwards from the main body (106) and enabling a flat object (200, 430) to be placed into the docking station (100);
- wherein the docking station (100) is configured to receive a handheld electronic device (430) as a flat object (200, 430) and to connect to the device (430) via Bluetooth; and
- a control unit (120) configured to
- determine whether or not a flat object (200, 430) has been placed into the docking station (100); and
- operate the docking station (100) in dependence on whether it is determined that a flat object (200, 430) has been placed into the docking station (100) or not;
**characterized in that**
- the docking station (100) comprises a loudspeaker (108) and one or more isolating elements (101, 109, 112, 404) configured to isolate vibrations caused by the loudspeaker (108) from the flat object (200, 430) held by the back support (102) of the docking station (100).

2. The docking station (100) according to any previous claims, wherein
- the docking station (100) comprises at least one load sensor (410) configured to capture load data regarding a physical load, notably a weight, impacting on the docking station (100); and
- the control unit (120) is configured to determine whether or not a flat object (200, 430) has been placed into the docking station (100) based on the load data.

3. The docking station (100) according to claim 2, wherein
- the docking station (100) comprises at least one load sensor (410) on at least one foot (105, 111) of the docking station (100); and/or
- the docking station (100) comprises a base support (404) within a contact area between the back support (102) and the main body (106);
- the base support (404) is configured to receive a lower end of the flat object (200, 430), when the flat object (200, 430) is placed into the docking station (100); and
- the docking station (100) comprises at least one load sensor (410) at the base support (404).

4. The docking station (100) according to any previous claims, wherein
- the docking station (100) comprises a base support (404) within a contact area between the back support (102) and the main body (106);
- the base support (404) is configured to receive a lower end of the flat object (200, 430), when the flat object (200, 430) is placed into the docking station (100);
- the docking station (100) comprises at least one presence sensor (420) at the base support (404);
- the presence sensor (420) is configured to capture presence data regarding the presence or the absence of the flat object (200, 430); and
- the control unit (120) is configured to determine whether or not a flat object (200, 430) has been placed into the docking station (100) based on the presence data.

5. The docking station (100) according to claim 4, wherein the presence sensor (420) comprises an infrared sensor and/or a capacitive sensor.

6. The docking station (100) according to any of claims 2 to 5, wherein the docking station (100) comprises at least two load sensors (410) and/or presence sensors (420) at different locations within the docking station (100).

7. The docking station (100) according to any previous claims, wherein
- the control unit (120) is configured to send a control signal to the electronic device (430), if it is determined that the electronic device (430) has been placed into the docking station (100).

8. The docking station (100) according to claim 7, wherein
- the control signal is directed at an execution of a pre-determined software application on the electronic device (430); and/or
- the control signal is directed at a connection of the electronic device (430) to a pre-determined internet site.

9. The docking station (100) according to any previous claims , wherein the one or more isolating elements (101, 109, 112, 404) comprise
- one or more isolating elements (101) within an inner area of the back support (102); and/or
- an isolating element (112) at a top edge of the back support (102); and/or
- a base support (404) within a contact area between the back support (102) and the main body (106), which is configured to receive a lower end of the flat object (200, 430), when the flat object (200, 430) is placed into the docking station (100); and/or
- one or more isolating elements (109) at a foot (105, 111) of the docking station (100).

10. The docking station (100) according to any previous claims, wherein the one or more isolating elements (101, 109, 112, 404) comprise an elastomer, silicone and/or rubber.

11. The docking station (100) according to any previous claims, wherein
- the docking station (100) comprises a gesture sensor (104) configured to capture gesture data regarding a gesture, notably a hand gesture, performed by a user of the docking station (100); and
- the control unit (120) is configured to control the docking station (100), notably to control rendering of an audio signal, in dependence on the gesture data.
